# EUROPEAN PATENT SPECIFICATION

(11) **EP 3 898 382 B1**
(45) Date of publication and mention of the grant of the patent: **23.07.2025**
(21) Application number: 19805480.1
(22) Date of filing: 29.10.2019
(51) Int. Cl.: B62D 6/00, B62D 15/02

(54) **STEERING COMMAND LIMITING FOR SAFE AUTONOMOUS AUTOMOBILE OPERATION**
LENKBEFEHLSBEGRENZUNG FÜR EINEN SICHEREN AUTONOMEN KRAFTFAHRZEUGBETRIEB
LIMITATION DE COMMANDE DE BRAQUAGE DESTINÉE AU FONCTIONNEMENT SÛR D'UNE AUTOMOBILE AUTONOME

(30) Priority: 18.12.2018 US 201862781099 P; 29.05.2019 US 201916424785
(43) Date of publication of application: 27.10.2021
(73) Proprietor: QUALCOMM INCORPORATED, San Diego, California 92121-1714 (US)
(72) Inventor: MELLINGER III, Daniel Warren, San Diego, California 92121-1714 (US); VAN SCHOYCK, Travis, San Diego, California 92121-1714 (US); TURPIN, Matthew Hyatt, San Diego, California 92121-1714 (US)
(74) Representative: Emde, Eric
(86) International application number: PCT/US2019/058502
(87) International publication number: WO 2020/131225

(56) References cited:
- WO-A1-2018/054517
- WO-A1-2018/116654
- US-A1- 2008 077 295
- US-A1- 2008 177 445
- US-A1- 2014 032 049

## Description

### RELATED APPLICATIONS

This application claims the benefit of priority to U.S. Provisional Application No. 62/781,099, entitled "Steering Command Limiting For Safe Autonomous Automobile Operation" filed December 18, 2018.

### BACKGROUND

Automobiles and trucks are becoming more intelligent as the industry moves towards deploying autonomous and semi-autonomous vehicles. Autonomous and semi-autonomous vehicles can detect information about their location and surroundings (for example, using radar, lidar, GPS, file odometers, accelerometers, cameras, and other sensors), and include control systems that interpret sensory information to identify hazards and determine navigation paths to follow. Autonomous and semi-autonomous vehicles include control systems to operate with limited or no control from an occupant or other operator of the automobile.

Reference is made to US 2008/077295 A1 disclosing a system and a method for directionally stabilizing a vehicle with the aid of a steering system used for influencing a steering angle of the vehicle's steered wheels and a stabilizing system which controls the steering system for increasing the vehicle's directional stability. The stabilizing system is characterized in that the stabilizing system controls the steering system according to the lateral force factor of at least one steered wheel for defining the steering angle stabilizing the vehicle, wherein the stabilizing system adjusts the slip angle of the steered wheels in such a way that the lateral force factor does not substantially exceed the maximum range thereof.

Reference is made to WO 2018/054517 A1, which relates to a method for performing an evasive maneuver (AVM) with a utility vehicle combination, having at least the following steps: detecting whether a collision between the utility vehicle combination and a collision object is imminent; determining an evasion trajectory (AT_0) if a collision is recognized; determining a desired steering angle using the evasion trajectory (AT_0) and actuating an active steering system depending on the determined desired steering angle such that the utility vehicle combination moves along the evasion trajectory (AT_0) from a starting lane to a target lane to perform the evasive maneuver; determining a desired deceleration of the vehicle and actuating an electronic brake system depending on the desired deceleration of the vehicle to brake the utility vehicle combination while performing the evasive maneuver. According to the invention, a lateral acceleration (aLat) of the utility vehicle combination is determined during performance of the evasive maneuver, wherein the desired steering angle is limited if the lateral acceleration (aLat) reaches or exceeds a maximum lateral acceleration (aLatMax), and/or the desired deceleration of the vehicle is limited to a maximum desired deceleration of the vehicle if a total acceleration (aTot) of the utility vehicle combination reaches or exceeds a maximum total acceleration (aTotMax). WO 2018/054517 A1 discloses in particular a method of controlling a vehicle, comprising:determining a steering wheel angle limit based on a maximum lateral acceleration of the vehicle;generating a steering wheel command and a throttle-brake command.

Further reference is made to US 2014/032049 A1 disclosing a collision avoidance system for assisting a driver in avoiding a collision between a host vehicle and obstacle. A processor recursively calculates a time-to-collision with the obstacle and an optimal collision avoidance path for avoiding the collision. The optimum collision avoidance path is recursively generated based on a position and speed of the host vehicle relative to the obstacle and an updated calculated time-to-collision. A sensing device determines whether the driver of the vehicle has initiated a steering maneuver to avoid the obstacle. A steering assist mechanism maintains the host vehicle along the optimum collision avoidance path. The steering assist mechanism applies a steering assist torque for producing steering adjustments to assist in guiding the host vehicle along the optimum collision avoidance path to the target lane. The steering assist torque generated by the steering assist mechanism is recursively adjusted based on a recent updated optimum collision avoidance path.

### SUMMARY

The present invention is set forth in the independent claims, respectively. Preferred embodiments of the invention are described in the dependent claims.

Various aspects include methods of controlling a vehicle by limiting a steering command angle during operation of the vehicle. In some aspects, the method may include determining a steering wheel angle limit based on a maximum lateral acceleration of the vehicle, generating a steering wheel command and throttle-brake commands, determining whether an angle of the generated steering wheel command exceeds the determined steering wheel angle limit, and adjusting an operation of the vehicle in response to determining that the angle of the generated steering wheel command exceeds the determined steering wheel angle limit.

In some aspects, the method may include determining a location of the vehicle, a trajectory that the vehicle is to follow, and a speed profile for the vehicle based on inputs collected from one or more sensors or subsystems included in the vehicle, in which generating the steering wheel command and the throttle-brake commands includes generating the steering wheel command and the throttle-brake commands based on the determined location, trajectory and speed profile.

In some aspects, adjusting the operation of the vehicle may include one or more of disregarding the steering wheel command, disabling autonomous control, notifying an operator of the vehicle or setting the angle of the generated steering wheel command to a value that is less than or equal to the steering wheel angle limit.

Some aspects may further include determining the maximum lateral acceleration based on a current condition of the vehicle. Some aspects may further include determining a current condition other than a current speed of the vehicle, in which determining the steering wheel angle limit based on the maximum lateral acceleration of the vehicle includes determining the steering wheel angle limit based on the maximum lateral acceleration and the determined current condition. In some aspects, determining the current condition other than the current speed of the vehicle may include determining at least one or more of a vehicle condition, a weather condition, and/or a roadway condition.

Some aspects may further include determining a current speed of the vehicle, in which determining the steering wheel angle limit based on the maximum lateral acceleration of the vehicle includes determining the steering wheel angle limit based on the maximum lateral acceleration and the current speed, and generating the steering wheel command and the throttle-brake commands includes generating the steering wheel command to include the determined steering wheel angle limit.

Some aspects may further include determining a dynamic model of the vehicle, in which determining the steering wheel angle limit based on the maximum lateral acceleration of the vehicle includes determining the steering wheel angle limit based on the dynamic model, and generating the steering wheel command and the throttle-brake command includes generating the steering wheel command to include the determined steering wheel angle limit. In some aspects, determining the dynamic model of the vehicle comprises determining the dynamic model based on one or more of mass of the vehicle, moments of inertia of the vehicle, wheelbase length of the vehicle, location of a center of gravity of the vehicle, a tire stiffness coefficient, and/or a tire dynamic model.

Further aspects include a vehicle including a processor configured with processor-executable instructions to perform operations of any of the methods summarized above. Further aspects include a non-transitory processor-readable storage medium having stored thereon processor-executable software instructions configured to cause a processor to perform operations of any of the methods summarized above. Further aspects include a processing device for use in a vehicle and configured to perform operations of any of the methods summarized above.

### BRIEF DESCRIPTION OF THE DRAWINGS

The accompanying drawings, which are incorporated herein and constitute part of this specification, illustrate exemplary embodiments, and together with the general description given above and the detailed description given below, serve to explain the features of the various embodiments.
FIGS. 1A and 1B are component block diagrams illustrating a vehicle suitable for implementing various embodiments.
FIG. 1C is a component block diagram illustrating components of a vehicle suitable for implementing various embodiments.
FIG. 2 is a component block diagram illustrating components of an example vehicle management system according to various embodiments.
FIG. 3 is a block diagram illustrating components of an example system on chip for use in a vehicle that may be configured to collect and analyze sensor information in accordance with various embodiments.
FIG. 4 is a process flow diagram illustrating an embodiment method of limiting a steering command angle during operation of an autonomous vehicle according to various embodiments.
FIG. 5 is a process flow diagram illustrating a method of determining and using a steering angle limit to control an autonomous vehicle in accordance with an embodiment.
FIGs. 6A and 6B are process flow diagrams illustrating methods of controlling an autonomous vehicle in accordance with various embodiments.

### DETAILED DESCRIPTION

Various aspects will be described in detail with reference to the accompanying drawings. Wherever possible, the same reference numbers will be used throughout the drawings to refer to the same or like parts. References made to particular examples and embodiments are for illustrative purposes and are not intended to limit the scope of the various aspects or the claims.

Various embodiments include methods, and vehicles, vehicle management systems and processing devices for use in autonomous and semi-autonomous vehicles that are configure to implement the methods for limiting a steering command angle during operation of autonomous and semi-autonomous vehicles at highway speeds.

Autonomous and semi-autonomous vehicles often include a multitude of sensors and subsystems, and a vehicle management system that collects and uses information from these sensors and subsystems to generate brake, throttle and steering commands for controlling operations of the vehicle. Such steering commands may include a steering angle computation that factors in the vehicle's current or planned speed of travel, as well as the vehicle's maximum lateral acceleration and other factors. Any error in the collection or analysis of information could lead to an incorrect steering angle computation, the implementation of which could cause the vehicle to make an unexpected or overly aggressive maneuver that reduces passenger comfort or results in an unsafe condition (e.g., roller over, shifting of cargo, etc.).

Various embodiments include a vehicle management system that dynamically determines an appropriate threshold for the steering angle based on a maximum lateral acceleration of the vehicle and/or current conditions, and uses the dynamically determined threshold to cap or limit the steering angle that is applied by the vehicle during operation at highway speeds.

For example, in some embodiments, the vehicle management system (or processing device, processor, control unit, etc.) may be configured to determine the current location of the vehicle, a trajectory that the vehicle is to follow, and a speed profile for the vehicle, and generate steering wheel and throttle-brake commands based on the determined location, trajectory and speed profile. The vehicle management system may also determine a steering wheel angle limit (or threshold) based on a maximum lateral acceleration of the vehicle under current conditions, such as a vehicle condition, a weather condition, or a roadway condition. The vehicle management system may determine whether a steering angle in the steering wheel command exceeds the determined steering wheel angle limit/threshold, and perform various operations in response to determining that the steering angle or a commanded steering angle exceeds the determined steering wheel angle limit/threshold. For example, the vehicle management system may disregard the steering wheel command, disable autonomous control in the vehicle, notify an operator of the vehicle and/or set the value of the steering angle to less than or equal to the steering wheel angle limit/threshold in response to determining that the steering angle or a commanded steering angle exceeds the determined steering wheel angle limit/threshold.

Various embodiments may prevent the vehicle from implementing an excessively large, erroneous, or outlier steering angle that could cause the vehicle to make an unexpected, overly aggressive, or dangerous maneuver when traveling at highway speed. As such, the implementation and use of various embodiments in an autonomous or semi-autonomous vehicle may improve the safety, performance and functioning of the vehicle.

As used herein, the term "computing device" refers to any one or all of vehicle management systems, display sub-systems, driver assistance systems, vehicle controllers, vehicle system controllers, vehicle communication system, infotainment systems, vehicle display systems or subsystems, vehicle data controllers or routers, cellular telephones, smart phones, personal or mobile multi-media players, personal data assistants (PDAs), laptop computers, personal computers, tablet computers, smart books, palm-top computers, wireless electronic mail receivers, multimedia Internet enabled cellular telephones, vehicle controllers, and similar electronic devices which include a programmable processor and memory and circuitry configured to perform operations as described herein.

There are a variety of conventional solutions that could be used to determine a steering angle for a vehicle. For example, some vehicles may be equipped with a system that chooses a steering angle or sets a steering angle limit to prevent a jackknifed condition when the vehicle is towing a trailer and traveling in a reverse direction at low operational speeds. Such a conventional system may be configured to receive a first steering angle command from a first steering module (e.g., park assist system, etc.), receive a second steering angle command from another steering module (e.g., trailer backup assist system, etc.), sense steering column torque, and generate a third (more refined) steering angle command for controlling the vehicle based on the steering column torque and the first and second steering angle commands. The third, and more refined, steering angle could be applied based on detected conditions, such as when the steering torque is less than a threshold torque.

While such a system may be suitable for setting a steering angle for vehicle that is towing a trailer and traveling in a reverse direction at low operational speeds, it is not suitable for intelligently and dynamically determining the appropriate threshold/limit for the steering angle when the vehicle is traveling in a forward direction at highway speeds. This is because such a system does not factor in current conditions and lateral acceleration to prevent the vehicle from implementing steering wheel commands that would be unsafe or impact the passenger experience at highway speeds. As such, the use of conventional systems and solutions for determining steering angles and steering command limits could result in an unsafe condition (e.g., rollover, etc.) when the vehicle is traveling at highway speeds (e.g., speeds above 35, 45 or 55 miles per hour, etc.).

For ease of reference, the term "host vehicle" is used to refer to an autonomous and semi-autonomous vehicle implementing various embodiments, while terms such as "other vehicle," "another vehicle" and "observed vehicle" are used to refer to vehicles that the host vehicle observes and tracks using various embodiments.

A host vehicle may include various systems that collect and analyze inputs from a large number of sensors, systems, and sub-systems within the vehicle. For example, a host vehicle may include a perception system, a behavioral prediction system, a behavior planning system, a motion planning system, and a motion control system. The perception system may be configured to collect input data from various sensors (e.g., radar, lidar, cameras, inertial measurement units (IMU) etc.), navigation systems, vehicle networks, controller area network (CAN) buses, high definition (HD) maps, and databases. The host vehicle may use this information to determine the current location/position of the vehicle, identify and analyze the roadways and environments surrounding the vehicle, and determine locations and states of other vehicles and objects in close proximity to the vehicle.

The behavioral prediction system may be configured to use the collected information to predict future movements and behaviors of the other vehicles and objects on the road. The behavior planning system may be configured to determine a desired high-level behavior for the host vehicle and/or plan the behavior of the host vehicle (e.g., stay in the same lane, change lanes, accelerate, decelerate, etc.). The motion planning and control systems may be configured to plan a trajectory or route to be followed by the vehicle, determine a speed profile (e.g., lateral acceleration, etc.), compute a steering angle that identifies the angle in which the wheels should be rotated to follow the planned trajectory at the determined speed profile, and issue throttle-brake and steering wheel commands to a lower level control system (e.g., DBW system, etc.) that controls the operations of the vehicle to guide it along the planed trajectory or route.

The systems that compute the steering command angle (e.g., motion planning and control systems, etc.) often perform complex analysis of inputs from a large number of sensors, systems, and sub-systems within the vehicle, and factor in the vehicle's current or planned speed of travel or lateral acceleration. Any error in the sensor/input information or their analysis could lead to an incorrect steering angle computation. Implementing an incorrect steering angle could cause the vehicle to make an unexpected or overly aggressive maneuver that reduces passenger comfort or results in an unsafe condition (e.g., roller over, shifting of cargo, etc.). To address such needs, various embodiments dynamically determine the appropriate threshold for steering angle commands, and cap or limit the steering angle based on the dynamically determined threshold to prevent excessively large, erroneous, or outlier steering angle computations that could cause the vehicle to make an unexpected, overly aggressive, or dangerous maneuvers when traveling at highway speeds.

Various embodiments include control systems configured to intelligently and dynamically determine and set steering angle limits that prevent the host vehicle from implementing steering wheel commands that include excessively large, erroneous, or outlier steering angles. Various embodiments may improve the operational safety of autonomous and semi-autonomous vehicles, as well as the occupant experience, by dynamically determining steering command angle limits appropriate for current operating conditions of the vehicle, including road conditions, vehicle conditions, dynamics of the vehicle, and the lateral acceleration that would result from applying a steering angle.

In some embodiments, a vehicle management system in an autonomous or semi-autonomous vehicle may be configured to determine current operating conditions of the vehicle as well as conditions around the vehicle, determine a maximum allowable lateral acceleration in view of the determined conditions, and dynamically determine a steering command angle limit based on the operating conditions and/or maximum allowable lateral acceleration. The vehicle management system may determine a desired direction of travel for the vehicle, determine a steering wheel angle to which the steering wheel should be adjusted to traverse an upcoming road segment, and determine whether the determined steering wheel command angle exceeds the determined steering wheel command angle limit. The vehicle management system may then adjust the operations of the vehicle (e.g., speed, steering wheel angle, etc.) to comply with the steering wheel command angle limit. The vehicle management system may take into account the roadway boundaries and/or a desired direction of travel in selecting the adjustments to operations to comply with an exceeded steering wheel command angle limit. For example, if a wider turn is possible (e.g., when the roadway is wide and there are no other vehicles to avoid), the operational adjustment may involve decreasing the commanded steering wheel angle. As another example, if the vehicle's path is constrained (e.g., by the roadway and/or adjacent vehicles), the operational adjustment may involve decreasing the vehicle's speed, thereby resulting in a relaxed steering wheel command angle limit so that the determined steering wheel command angle will comply with an updated steering wheel command angle limit.

The vehicle management system may dynamically determine the current operating conditions of the vehicle based on monitoring or determining any or all of the current speed of the vehicle, current location of the vehicle, current outside temperature, current weather conditions (e.g., fair, snow, ice, rain, etc.), road surface type (e.g., gravel, asphalt, concrete, etc.), lane width, traffic within a vicinity of the vehicle, current vehicle mass (including mass of passengers, cargo, fuel, etc.), moments of inertia, center of gravity location, wheelbase length, tire stiffness coefficients or other tire dynamic models, and other similar factors, conditions or considerations. In various embodiments, the maximum allowable lateral acceleration may be a fixed value (e.g., a lateral acceleration that occupants would find tolerable or comfortable) or a value that is determined dynamically in the host vehicle based on perceived conditions.

In various embodiments, the vehicle management system may dynamically determine the maximum allowable lateral acceleration based on current operating conditions of the vehicle and other factors/considerations, such as passenger preferences (e.g., for comfort, sport or vehicle responsiveness, etc.), vehicle safety (e.g., to prevent spinouts, loss of control, rollovers, etc.), type of cargo (e.g., eggs vs. bricks, etc.), placement of cargo within the vehicle (e.g., high or low placement on a truck bed, etc.), other cargo-based factors (e.g., to avoid damaging a fragile cargo, etc.), or any combination thereof.

The steering command angle limit may be an information structure, parameter or threshold value that the vehicle management system uses or references to limit the steering wheel command angle and/or lateral acceleration to an appropriate level.

In some embodiments, the vehicle management system may dynamically determine the steering command angle limit based on the current operating conditions, such as the current speed of the vehicle.

In some embodiments, the vehicle management system may determine the steering command angle limit taking into account the fixed or dynamically determined maximum allowable lateral acceleration.

In some embodiments, the vehicle management system may dynamically determine the steering command angle limit by applying the current operating conditions to an algorithm or function configured to correlate speed and other current operating conditions to a steering angle limit that will result in appropriate lateral acceleration.

In some embodiments, the vehicle management system may determine the steering command angle limit by using the current operating conditions to query a lookup table (or other suitable information structure) that is populated with steering angle limits correlated to speed and other parameters that will result in appropriate lateral acceleration.

In some embodiments, the vehicle management system may determine the steering command angle limit by applying the current speed and other conditions to a dynamic model of the vehicle. The dynamic model may be generated or updated based the current operating conditions. In various embodiments, the dynamic model may be based on one or more variable criteria such as, but not limited to, current vehicle mass (including mass of passengers and cargo and fuel), moments of inertia, center of gravity location, wheelbase length, and/or tire stiffness coefficients or other tire dynamic models. Such criteria may vary on each trip and as conditions (e.g., temperature) vary, and thus the dynamic model may be determined or updated periodically or dynamically. In some embodiments, the dynamic model may be a dynamic bicycle model. For example, the vehicle management system may compute and use the dynamic bicycle model to predict how determine the steering angle for tracking a desired navigation path.

In various embodiments, a processor of an autonomous or semi-autonomous vehicle (i.e., the host vehicle) may receive a steering wheel command angle from an autonomous or semi-autonomous control system. For example, a control system of the vehicle may determine a desired direction of travel and determine a steering wheel angle necessary to achieve the desired direction of travel. In this example, the determined steering wheel command angle represents the angle to which the steering wheel should be adjusted. In various embodiments, the processor may determine whether the determined steering wheel command angle exceeds the determined steering wheel command angle limit. If the determined steering wheel command angle exceeds the determined steering wheel command angle limit, the processor may alter the determined steering wheel command angle to match the steering wheel command angle limit. Thus, the steering wheel command angle limit functions as a threshold that may vary based on current conditions. In some embodiments, the processor may inform a path planning module of an autonomous control system of a safe turning angle in response to determining that the steering wheel command angle exceeds the steering wheel command angle limit. In some embodiments, the processor may issue an alarm (e.g., to enable a human operator to take manual control) in response to determining that the steering wheel command angle exceeds the determined steering wheel command angle limit.

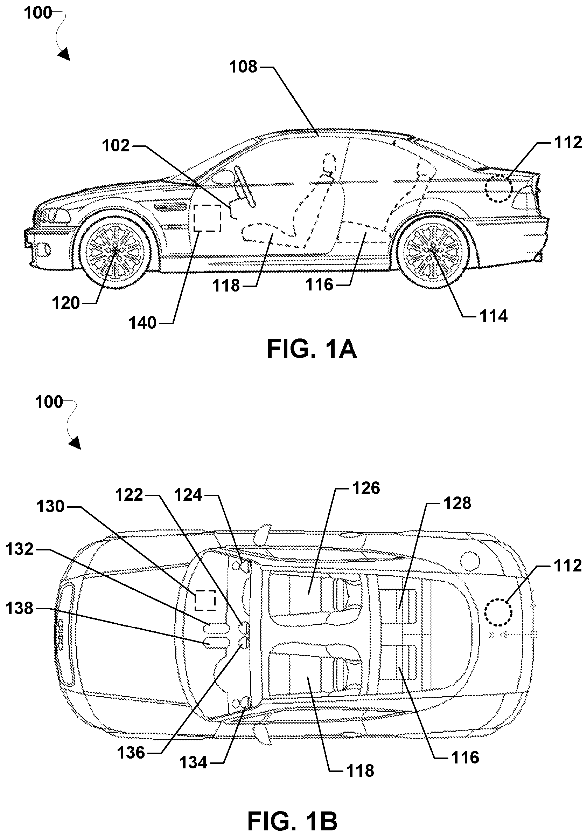

Various embodiments may be implemented within a variety of host vehicles, an example vehicle 100 of which is illustrated in FIGS. 1A and 1B. With reference to FIGS. 1A and 1B, a host vehicle 100 may include a control unit 140 and a plurality of sensors 102-138, including satellite geopositioning system receivers 108, occupancy sensors 112, 116, 118, 126, 128, tire pressure sensors 114, 120, cameras 122, 136, microphones 124, 134, impact sensors 130, radar 132, and lidar 138.

The plurality of sensors 102-138 disposed in or on the host vehicle may be used for various purposes involved in autonomous and semiautonomous navigation and control. The sensors 102-138 may include sensors capable of detecting a variety of information useful for navigation and collision avoidance. Each of the sensors 102-138 may be in wired or wireless communication with a control unit 140, as well as with each other. In particular, the sensors may include one or more cameras 122, 136 or other optical sensors or photo optic sensors. The sensors may further include other types of object detection and ranging sensors, such as radar 132, lidar 138, IR sensors, and ultrasonic sensors. The sensors may further include tire pressure sensors 114, 120, humidity sensors, temperature sensors, satellite geopositioning sensors 108, accelerometers, vibration sensors, gyroscopes, gravimeters, impact sensors 130, force meters, stress meters, strain sensors, fluid sensors, chemical sensors, gas content analyzers, pH sensors, radiation sensors, Geiger counters, neutron detectors, biological material sensors, microphones 124, 134, occupancy sensors 112, 116, 118, 126, 128, proximity sensors, and other sensors.

The host vehicle control unit 140 may be configured with processor-executable instructions to perform various embodiments using information received from various sensors, particularly the cameras 122, 136. In some embodiments, the control unit 140 may supplement the processing of camera images using distance and relative position (e.g., relative bearing angle) that may be obtained from radar 132 and/or lidar 138 sensors. The control unit 140 may further be configured to control steering, braking and throttle of the host vehicle 100 when operating in an autonomous or semiautonomous mode using information regarding other vehicles determined using various embodiments.

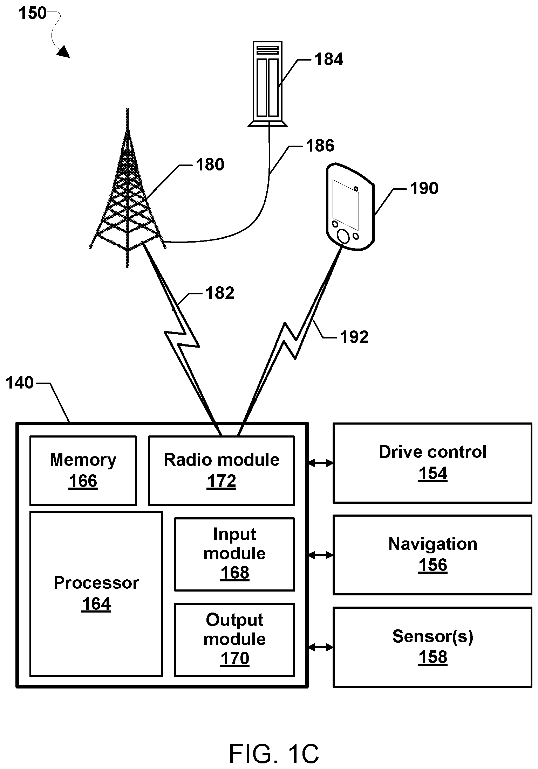

FIG. 1C is a component block diagram illustrating a system 150 of components and support systems suitable for implementing various embodiments. With reference to FIGS. 1A, 1B, and 1C, a host vehicle 100 may include a control unit 140, which may include various circuits and devices used to control the operation of the host vehicle 100. In the example illustrated in FIG. 1C, the control unit 140 includes a processor 164, memory 166, an input module 168, an output module 170 and a radio module 172. The control unit 140 may be coupled to and configured to control drive control components 154, navigation components 156, and one or more sensors 158 of the host vehicle 100.

As used herein, the terms "component," "system," "unit," "module," and the like include a computer-related entity, such as, but not limited to, hardware, firmware, a combination of hardware and software, software, or software in execution, which are configured to perform particular operations or functions. For example, a component may be, but is not limited to, a process running on a processor, a processor, an object, an executable, a thread of execution, a program, and/or a computer. By way of illustration, both an application running on a communication device and the communication device may be referred to as a component. One or more components may reside within a process and/or thread of execution and a component may be localized on one processor or core and/or distributed between two or more processors or cores. In addition, these components may execute from various non-transitory computer readable media having various instructions and/or data structures stored thereon. Components may communicate by way of local and/or remote processes, function or procedure calls, electronic signals, data packets, memory read/writes, and other known computer, processor, and/or process related communication methodologies.

The processor 164 may be configured with processor-executable instructions to control maneuvering, navigation, and other operations of the host vehicle 100, including operations of various embodiments. The processor 164 may be coupled to the memory 166.

The radio module 172 may be configured for wireless communication. The radio module 172 may exchange signals 182 (e.g., command signals for controlling maneuvering, signals from navigation facilities, etc.) with a network transceiver 180, and may provide the signals 182 to the processor 164 and/or the navigation unit 156. In some embodiments, the radio module 172 may enable the host vehicle 100 to communicate with a wireless communication device 190 through a wireless communication link 192. The wireless communication link 192 may be a bidirectional or unidirectional communication link, and may use one or more communication protocols.

The input module 168 may receive sensor data from one or more vehicle sensors 158 as well as electronic signals from other components, including the drive control components 154 and the navigation components 156. The output module 170 may be used to communicate with or activate various components of the host vehicle 100, including the drive control components 154, the navigation components 156, and the sensor(s) 158.

The control unit 140 may be coupled to the drive control components 154 to control physical elements of the host vehicle 100 related to maneuvering and navigation of the host vehicle, such as the engine, motors, throttles, steering elements, braking (including regenerative braking if applicable), and the like. The drive control components 154 may also include components that control other devices of the host vehicle, including environmental controls (e.g., air conditioning and heating), external and/or interior lighting, interior and/or exterior informational displays (which may include a display screen or other devices to display information), and other similar devices.

The control unit 140 may be coupled to the navigation components 156, and may receive data from the navigation components 156 and be configured to use such data to determine the present position and orientation of the host vehicle 100, as well as an appropriate course toward a destination. In various embodiments, the navigation components 156 may include or be coupled to a global navigation satellite system (GNSS) receiver system (e.g., one or more Global Positioning System (GPS) receivers) enabling the host vehicle 100 to determine its current position using GNSS signals. Alternatively or in addition, the navigation components 156 may include radio navigation receivers for receiving navigation beacons or other signals from radio nodes, such as Wi-Fi access points, cellular network sites, radio station, remote computing devices, other vehicles, etc. Through control of the drive control elements 154, the processor 164 may control the host vehicle 100 to navigate and maneuver. The processor 164 and/or the navigation components 156 may be configured to communicate with a server 184 on a network 186 (e.g., the Internet) using a wireless connection 182 with a cellular data network 180 to receive commands to control maneuvering, receive data useful in navigation, provide real-time position reports, and assess other data.

The control unit 162 may be coupled to one or more sensors 158. The sensor(s) 158 may include the sensors 102-138 as described, and may the configured to provide a variety of data to the processor 164.

While the control unit 140 is described as including separate components, in some embodiments some or all of the components (e.g., the processor 164, the memory 166, the input module 168, the output module 170, and the radio module 172) may be integrated in a single device or module, such as a system-on-chip (SOC) processing device. Such an SOC processing device may be configured for use in vehicles and be configured, such as with processor-executable instructions executing in the processor 164, to perform operations of various embodiments when installed into a host vehicle.

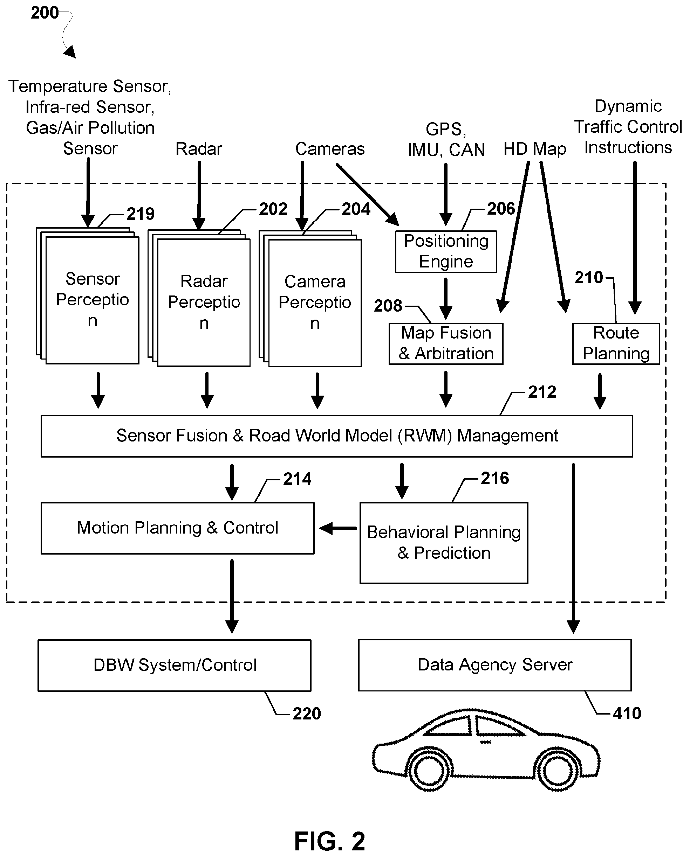

FIG. 2 illustrates an example of subsystems, computational elements, computing devices or units within a vehicle management system 200, which may be utilized within a vehicle 100. With reference to FIGS. 1A-2, in some embodiments, the various computational elements, computing devices or units within vehicle management system 200 may be implemented within a system of interconnected computing devices (i.e., subsystems), that communicate data and commands to each other (e.g., indicated by the arrows in FIG. 2). In other embodiments, the various computational elements, computing devices or units within vehicle management system 200 may be implemented within a single computing device, such as separate threads, processes, algorithms or computational elements. Therefore, each subsystem/computational element illustrated in FIG. 2 is also generally referred to herein as "layer" within a computational "stack" that constitutes the vehicle management system 200. However, the use of the terms layer and stack in describing various embodiments are not intended to imply or require that the corresponding functionality is implemented within a single autonomous (or semi-autonomous) vehicle management system computing device, although that is a potential implementation embodiment. Rather the use of the term "layer" is intended to encompass subsystems with independent processors, computational elements (e.g., threads, algorithms, subroutines, etc.) running in one or more computing devices, and combinations of subsystems and computational elements.

In various embodiments, the vehicle management system stack 200 may include a radar perception layer 202, a camera perception layer 204, a positioning engine layer 206, a map fusion and arbitration layer 208, a route planning layer 210, sensor fusion and road world model (RWM) management layer 212, motion planning and control layer 214, behavioral planning and prediction layer 216, and another sensor perception layer 219. The layers 202-219 are merely examples of some layers in one example configuration of the vehicle management system stack 200. In other configurations consistent with various embodiments, other layers may be included, such as additional layers for other perception sensors (e.g., LIDAR perception layer, etc.), additional layers for planning and/or control, additional layers for modeling, etc., and/or certain of the layers 202-219 may be excluded from the vehicle management system stack 200. Each of the layers 202-219 may exchange data, computational results and commands as illustrated by the arrows in FIG. 2. Further, the vehicle management system stack 200 may receive and process data from sensors (e.g., radar, lidar, cameras, inertial measurement units (IMU) etc.), navigation systems (e.g., GPS receivers, IMUs, etc.), vehicle networks (e.g., Controller Area Network (CAN) bus), and databases in memory (e.g., digital map data). The vehicle management system stack 200 may output vehicle control commands or signals to the drive by wire (DBW) system/control unit 220, which is a system, subsystem or computing device that interfaces directly with vehicle steering, throttle and brake controls.

The radar perception layer 202 may receive data from one or more detection and ranging sensors, such as radar (e.g., 132) and/or lidar (e.g., 138), and process the data to recognize and determine locations of other vehicles and objects within a vicinity of the vehicle 100. The radar perception layer 202 may include use of neural network processing and artificial intelligence methods to recognize objects and vehicles, and pass such information on to the sensor fusion and RWM management layer 212.

The camera perception layer 204 may receive data from one or more cameras, such as cameras (e.g., 122, 136), and process the data to recognize and determine locations of other vehicles and objects within a vicinity of the vehicle 100. The camera perception layer 204 may include use of neural network processing and artificial intelligence methods to recognize objects and vehicles, and pass such information on to the sensor fusion and RWM management layer 212.

The sensor perception layer 219 may receive data from one or more sensors, such as a one or more temperature sensors, one or more infra-red sensors, one or more gas/air pollution sensors, and/or any other type of sensor (e.g., any of sensors 102-138), and process the data to recognize and determine one or more states of the environment in the vicinity of the vehicle 100. The sensor perception layer 219 may include use of neural network processing and artificial intelligence methods to recognize states of the environment, and pass such information on to the sensor fusion and RWM management layer 212.

The positioning engine layer 206 may receive data from various sensors and process the data to determine a position of the vehicle 100. The various sensors may include, but is not limited to, GPS sensor, an IMU, and/or other sensors connected via a CAN bus. The positioning engine layer 206 may also utilize inputs from one or more cameras, such as cameras (e.g., 122, 136) and/or any other available sensor, such as radars, LIDARs, etc.

The map fusion and arbitration layer 208 may access data within a high definition (HD) map database and receive output received from the positioning engine layer 206 and process the data to further determine the position of the vehicle 100 within the map, such as location within a lane of traffic, position within a street map, etc. The HD map database may be stored in a memory (e.g., memory 166). For example, the map fusion and arbitration layer 208 may convert latitude and longitude information from GPS into locations within a surface map of roads contained in the HD map database. GPS position fixes include errors, so the map fusion and arbitration layer 208 may function to determine a best guess location of the vehicle within a roadway based upon an arbitration between the GPS coordinates and the HD map data. For example, while GPS coordinates may place the vehicle near the middle of a two-lane road in the HD map, the map fusion and arbitration layer 208 may determine from the direction of travel that the vehicle is most likely aligned with the travel lane consistent with the direction of travel. The map fusion and arbitration layer 208 may pass map-based location information to the sensor fusion and RWM management layer 212.

The route planning layer 210 may utilize the HD map, dynamic traffic control instructions from a traffic management system, and/or other inputs, such as from an operator or dispatcher, to plan a route to be followed by the vehicle 100 to a particular destination. As an example, the route planning layer 210 may use a specific location indicated for obtaining sensor data in a received data gathering request to plan a route from a current location of the vehicle to the specific location. The route planning layer 210 may pass map-based location information and/or the dynamic traffic control instructions to the sensor fusion and RWM management layer 212. However, the use of a prior map by other layers, such as the sensor fusion and RWM management layer 212, etc., is not required. For example, other stacks may operate and/or control the vehicle based on perceptual data alone without a provided map, constructing lanes, boundaries, and the notion of a local map as perceptual data is received.

The sensor fusion and RWM management layer212 may receive data and outputs produced by the radar perception layer 202, camera perception layer 204, sensor perception layer 219, map fusion and arbitration layer 208, and route planning layer 210, and use some or all of such inputs to estimate or refine the location and state of the vehicle 100 in relation to the road, other vehicles on the road, and other objects within a vicinity of the vehicle 100. For example, the sensor fusion and RWM management layer 212 may combine imagery data from the camera perception layer 204 with arbitrated map location information from the map fusion and arbitration layer 208 to refine the determined position of the vehicle within a lane of traffic. As another example, the sensor fusion and RWM management layer212 may combine object recognition and imagery data from the camera perception layer 204 with object detection and ranging data from the radar perception layer 202 to determine and refine the relative position of other vehicles and objects in the vicinity of the vehicle. As another example, the sensor fusion and RWM management layer 212 may receive information from vehicle-to-vehicle (V2V) communications (such as via the CAN bus) regarding other vehicle positions and directions of travel, and combine that information with information from the radar perception layer 202 and the camera perception layer 204 to refine the locations and motions of other vehicles.

As a further example, the sensor fusion and RWM management layer 212 may use dynamic traffic control instructions directing the vehicle 100 to change speed, lane, direction of travel, or other navigational element(s), and combine that information with other received information to determine refined location and state information. The sensor fusion and RWM management layer 212 may output the refined location and state information of the vehicle 100, as well as refined location and state information of other vehicles and objects in the vicinity of the vehicle 100, to the motion planning and control layer 214, the behavior planning and prediction layer 216, and/or a data agency server 410 (via wireless communications, such as through C-V2X connections, other wireless connections, etc.).

As a further example, the sensor fusion and RWM management layer 212 may monitor perception data from various sensors, such as perception data from a radar perception layer 202, camera perception layer 204, other perception layer, etc., and/or data from one or more sensors themselves to analyze conditions in the vehicle sensor data. The sensor fusion and RWM management layer 212 may be configured to detect conditions in the sensor data, such as sensor measurements being at, above, or below a threshold, certain types of sensor measurements occurring, etc., and may output the sensor data as part of the refined location and state information of the vehicle 100 provided to the behavior planning and prediction layer 216, and/or a data agency server 410 (via wireless communications, such as through C-V2X connections, other wireless connections, etc.).

The refined location and state information may include detailed information associated with the vehicle and the vehicle owner and/or operator, such as: vehicle specifications (e.g., size, weight, color, on board sensor types, etc.); vehicle position, speed, acceleration, direction of travel, attitude, orientation, destination, fuel/power level(s), and other state information; vehicle emergency status (e.g., is the vehicle an emergency vehicle or private individual in an emergency); vehicle restrictions (e.g., heavy/wide load, turning restrictions, high occupancy vehicle (HOV) authorization, etc.); capabilities (e.g., all-wheel drive, four-wheel drive, snow tires, chains, connection types supported, on board sensor operating statuses, on board sensor resolution levels, etc.) of the vehicle; equipment problems (e.g., low tire pressure, weak breaks, sensor outages, etc.); owner/operator travel preferences (e.g., preferred lane, roads, routes, and/or destinations, preference to avoid tolls or highways, preference for the fastest route, etc.); permissions to provide sensor data to a data agency server 410; and/or owner/operator identification information.

The behavioral planning and prediction layer 216 of the autonomous vehicle system stack 200 may use the refined location and state information of the vehicle 100 and location and state information of other vehicles and objects output from the sensor fusion and RWM management layer 212 to predict future behaviors of other vehicles and/or objects. For example, the behavioral planning and prediction layer 216 may use such information to predict future relative positions of other vehicles in the vicinity of the vehicle based on own vehicle position and velocity and other vehicle positions and velocity. Such predictions may take into account information from the HD map and route planning to anticipate changes in relative vehicle positions as host and other vehicles follow the roadway. The behavioral planning and prediction layer 216 may output other vehicle and object behavior and location predictions to the motion planning and control layer 214.

Additionally, the behavior planning and prediction layer 216 may use object behavior in combination with location predictions to plan and generate control signals for controlling the motion of the vehicle 100. For example, based on route planning information, refined location in the roadway information, and relative locations and motions of other vehicles, the behavior planning and prediction layer 216 may determine that the vehicle 100 needs to change lanes and accelerate, such as to maintain or achieve minimum spacing from other vehicles, and/or prepare for a turn or exit. As a result, the behavior planning and prediction layer 216 may calculate or otherwise determine a steering angle for the wheels and a change to the throttle setting to be commanded to motion planning and control layer 214 and the DBW system/control unit 220, along with various parameters that may be necessary to effectuate such a lane change and acceleration. One such parameter may be a computed steering wheel command angle.

The motion planning and control layer 214 may receive data and information outputs from the sensor fusion and RWM management layer 212 and other vehicle and object behavior as well as location predictions from the behavior planning and prediction layer 216, and use this information to plan and generate control signals for controlling the motion of the vehicle 100 and to verify that such control signals meet safety requirements for the vehicle 100. For example, based on route planning information, refined location in the roadway information, and relative locations and motions of other vehicles, the motion planning and control layer 214 may verify and pass various control commands or instructions to the DBW system/control unit 220.

The DBW system/control unit 220 may receive the commands or instructions from the motion planning and control layer 214 and translate such information into mechanical control signals for controlling wheel angle, brake and throttle of the vehicle 100. For example, DBW system/control unit 220 may respond to the computed steering wheel command angle by sending corresponding control signals to the steering wheel controller.

In various embodiments, the vehicle management system stack 200 may include functionality that performs safety checks or oversight of various commands, planning or other decisions of various layers that could impact vehicle and occupant safety. Such safety check or oversight functionality may be implemented within a dedicated layer (not shown) or distributed among various layers and included as part of the functionality. In some embodiments, a variety of safety parameters may be stored in memory and the safety checks or oversight functionality may compare a determined value (e.g., relative spacing to a nearby vehicle, distance from the roadway centerline, etc.) to corresponding safety parameter(s), and issue a warning or command if the safety parameter is or will be violated. For example, a safety or oversight function in the behavior planning and prediction layer 216 (or in a separate layer not shown) may determine the current or future separate distance between another vehicle (as refined by the sensor fusion and RWM management layer 212) and the vehicle (e.g., based on the world model refined by the sensor fusion and RWM management layer 212), compare that separation distance to a safe separation distance parameter stored in memory, and issue instructions to the motion planning and control layer 214 to speed up, slow down or turn if the current or predicted separation distance violates the safe separation distance parameter. As another example, safety or oversight functionality in the motion planning and control layer 214 (or a separate layer not shown) may compare a determined or commanded steering wheel command angle to a safe wheel angle limit or parameter, and issue an override command and/or alarm in response to the commanded angle exceeding the safe wheel angle limit.

Some safety parameters stored in memory may be static (i.e., unchanging over time), such as maximum vehicle speed. Other safety parameters stored in memory may be dynamic in that the parameters are determined or updated continuously or periodically based on vehicle state information and/or environmental conditions. Non-limiting examples of safety parameters include maximum safe speed, maximum brake pressure, maximum acceleration, and the safe wheel angle limit, all of which may be a function of roadway and weather conditions.

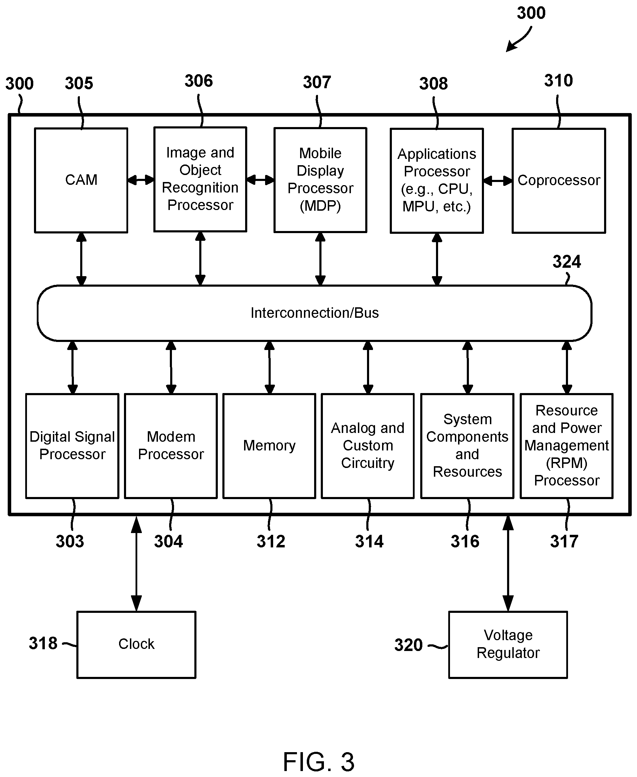

FIG. 3 illustrates an example system-on-chip (SOC) architecture of a processing device SOC 300 suitable for implementing various embodiments in vehicles. With reference to FIGS. 1A-3, the processing device SOC 300 may include a number of heterogeneous processors, such as a digital signal processor (DSP) 303, a modem processor 304, an image and object recognition processor 306, a mobile display processor (MDP) 307, an applications processor 308, and a resource and power management (RPM) processor 317. The processing device SOC 300 may also include one or more coprocessors 310 (e.g., vector co-processor) connected to one or more of the heterogeneous processors 303, 304, 306, 307, 308, 317. Each of the processors may include one or more cores, and an independent/internal clock. Each processor/core may perform operations independent of the other processors/cores. For example, the processing device SOC 300 may include a processor that executes a first type of operating system (e.g., FreeBSD, LINUX, OS X, etc.) and a processor that executes a second type of operating system (e.g., Microsoft Windows). In some embodiments, the applications processor 308 may be the SOC's 300 main processor, central processing unit (CPU), microprocessor unit (MPU), arithmetic logic unit (ALU), etc. The graphics processor 306 may be graphics processing unit (GPU).

The processing device SOC 300 may include analog circuitry and custom circuitry 314 for managing sensor data, analog-to-digital conversions, wireless data transmissions, and for performing other specialized operations, such as processing encoded audio and video signals for rendering in a web browser. The processing device SOC 300 may further include system components and resources 316, such as voltage regulators, oscillators, phase-locked loops, peripheral bridges, data controllers, memory controllers, system controllers, access ports, timers, and other similar components used to support the processors and software clients (e.g., a web browser) running on a computing device.

The processing device SOC 300 also include specialized circuitry (CAM) 305 that includes, provides, controls and/or manages the operations of one or more cameras 122, 136 (e.g., a primary camera, webcam, 3D camera, etc.), the video display data from camera firmware, image processing, video preprocessing, video front-end (VFE), in-line JPEG, high definition video codec, etc. The CAM 305 may be an independent processing unit and/or include an independent or internal clock.

In some embodiments, the image and object recognition processor 306 may be configured with processor-executable instructions and/or specialized hardware configured to perform image processing and object recognition analyses involved in various embodiments. For example, the image and object recognition processor 306 may be configured to perform the operations of processing images received from cameras (e.g., 122, 136) via the CAM 305 to recognize and/or identify other vehicles, and otherwise perform functions of the camera perception layer 204 as described. In some embodiments, the processor 306 may be configured to process radar or lidar data and perform functions of the radar perception layer 202 as described.

The system components and resources 316, analog and custom circuitry 314, and/or CAM 305 may include circuitry to interface with peripheral devices, such as cameras 122, 136, radar 132, lidar 138, electronic displays, wireless communication devices, external memory chips, etc. The processors 303, 304, 306, 307, 308 may be interconnected to one or more memory elements 312, system components and resources 316, analog and custom circuitry 314, CAM 305, and RPM processor 317 via an interconnection/bus module 324, which may include an array of reconfigurable logic gates and/or implement a bus architecture (e.g., CoreConnect, AMBA, etc.). Communications may be provided by advanced interconnects, such as high-performance networks-on chip (NoCs).

The processing device SOC 300 may further include an input/output module (not illustrated) for communicating with resources external to the SOC, such as a clock 318 and a voltage regulator 320. Resources external to the SOC (e.g., clock 318, voltage regulator 320) may be shared by two or more of the internal SOC processors/cores (e.g., a DSP 303, a modem processor 304, a graphics processor 306, an applications processor 308, etc.).

In some embodiments, the processing device SOC 300 may be included in a control unit (e.g., 140) for use in a vehicle (e.g., 100). The control unit may include communication links for communication with a telephone network (e.g., 180), the Internet, and/or a network server (e.g., 184) as described.

The processing device SOC 300 may also include additional hardware and/or software components that are suitable for collecting sensor data from sensors, including motion sensors (e.g., accelerometers and gyroscopes of an IMU), user interface elements (e.g., input buttons, touch screen display, etc.), microphone arrays, sensors for monitoring physical conditions (e.g., location, direction, motion, orientation, vibration, pressure, etc.), cameras, compasses, GPS receivers, communications circuitry (e.g., Bluetooth^{®}, WLAN, WiFi, etc.), and other well-known components of modern electronic devices.

As described, one safety limit or parameter is the steering wheel command angle limit. Turning the wheels at too sharp an angle for a current speed and/or compromised road conditions (e.g., wet or icy conditions, gravel roadway, etc.) can result in the vehicle losing control (e.g., skidding or spinning) or rolling over, as well as protecting passengers or cargo. Thus, the steering wheel command angle limit may be an important limit or parameter that safety or oversight functionality may check before enabling a steering wheel command. Because the safe wheel command angle changes with speed, as well as with road and weather conditions, the limit may be determined dynamically, such as periodically (e.g., every 1 to 5 seconds), continuously (e.g., part of a vehicle control loop), or episodically (e.g., in response to a change in speed or detection of a change in external conditions).

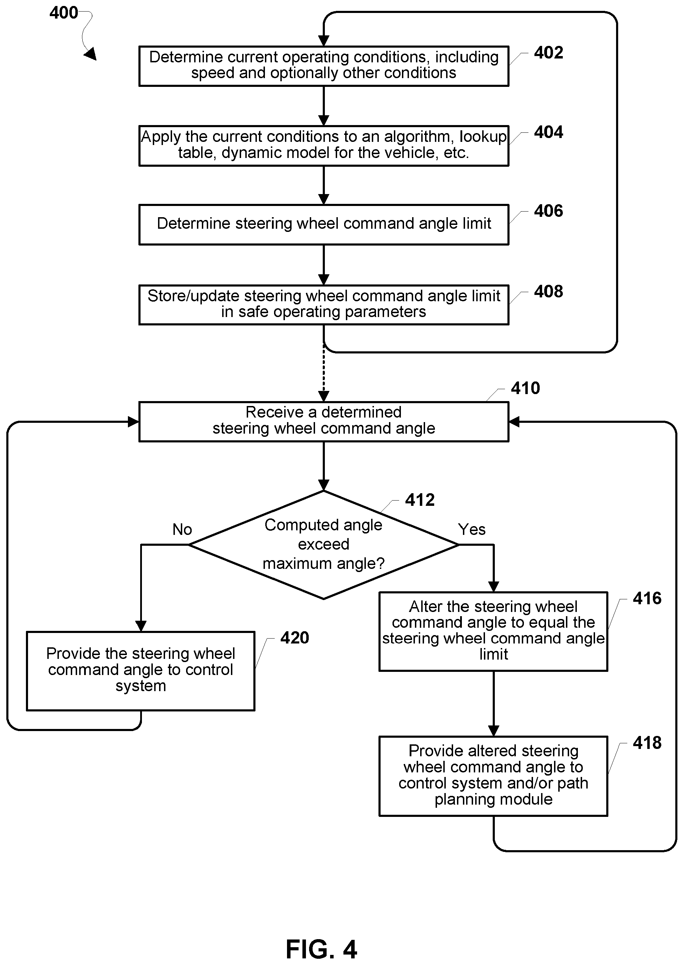

FIG. 4 illustrates a method 400 of dynamically determining the steering wheel command angle limit and using the limit to ensure safe steering wheel command angles according to various embodiments. With reference to FIGS. 1A-4, the method 400 may be implemented in a processor (e.g., 164), processing device (e.g., 300), and/or a control unit (e.g., 140) (variously referred to as a "processor") of a vehicle (e.g., 100). The order of operations performed in blocks 402-420 is merely illustrative, and the operations of blocks 402-420 may be performed in any order and partially simultaneously in various embodiments. In some embodiments, the method 400 may be performed by one or more layers within a vehicle management system stack 200. For example, some or all of operations of the method 400 may be performed as part of a safety or oversight function implemented within the motion planning and control layer 214. In other embodiments, the method 400 may be performed by a processor independently from, but in conjunction with, the vehicle management system stack 200. For example, the method 400 may be implemented as a stand-alone software module or within dedicated hardware that monitors data and commands from/within the vehicle management system stack 200 and is configured to take actions and store data as described. For ease of reference, the computing device, processor or

In block 402, the processor may determine current operating conditions of the host vehicle, including a current speed of the vehicle and optionally other conditions. Non-limiting examples of other conditions that the processor may determine that may impact the safe turning angle of the vehicle include current weather conditions (e.g., temperature and moisture), roadway conditions (e.g., gravel, ice or snow, etc.), and tire conditions (e.g., inflation level, treadwear, etc.).

In block 404, the processor may apply the current conditions to an algorithm, lookup table, dynamic model of the vehicle, or other suitable method for correlating current conditions to appropriate vehicle turning behavior. In some embodiments, current conditions may be applied to an algorithm or function configured to correlate speed and conditions to a steering angle limit that will result in appropriate lateral acceleration. In some embodiments, current conditions may be applied to a lookup table populated with steering angle limits correlated to speed and other parameters that will result in appropriate lateral acceleration. In some embodiments, current conditions may be applied to a dynamic model of the vehicle. Such a dynamic model may be based on one or more of the mass of the vehicle, distribution and mass of cargo and passengers within the vehicle, the moments of inertia of the vehicle, the location of the center of gravity of the vehicle, the length of the wheelbase of the vehicle, and a tire stiffness coefficient of a tire of the vehicle or other tire dynamic model. In some cases, the current operating conditions determined in block 402 may affect or adjust some parameters within the dynamic model of the vehicle, such as the tire stiffness coefficient may vary with ambient temperature.

In block 406, the processor may determine a steering wheel command angle limit based on the current conditions (including current speed). In various embodiments, the steering wheel command angle limit may be determined as the maximum turning angle that will limit lateral acceleration at the current speed under current conditions to an acceptable level. Lateral acceleration is a function of the vehicle speed and the turning angle. In some embodiments, the steering wheel command angle limit may be determined to limit lateral acceleration to within an appropriate limit that may take into account maximum allowable lateral acceleration for passengers (e.g., for comfort), cargo (e.g., to avoid damaging a fragile cargo) and/or vehicle safety (e.g., to prevent spinouts, loss of control or rollovers). In some embodiments, a maximum allowable lateral acceleration may be a fixed value, such as a lateral acceleration that occupants would find tolerable or comfortable. In some embodiments, the maximum allowable lateral acceleration may be a dynamic value based on a type of cargo (e.g., eggs vs. bricks) or placement of cargo within the vehicle (e.g., high or low placement on a truck bed). In some embodiments, the maximum allowable lateral acceleration may be a dynamic value based on the determined current conditions. For example, the maximum allowable lateral acceleration may be based on location, lane width, traffic within a vicinity of the vehicle, weather conditions, or other relevant conditions. As another example, the host vehicle may be able to remain stable on drive smooth asphalt up to a lateral acceleration of 0about 2 meters per second per second, which may be set as the maximum lateral acceleration, but the presence of ice, gravel or water on roadway may reduce the safe lateral acceleration by a significant fraction. Thus, as part of the operations in block 406, the processor may determine an appropriate lateral acceleration based upon current conditions and then determine the steering wheel command angle limit as the steering angle that will result in that lateral acceleration at the current speed. In some embodiments, the safe lateral acceleration may take into account other vehicles (e.g., drawing information from the behavior planning and prediction layer 216), such as relative locations of other vehicles, an amount of traffic nearby, expected or worst-case behavior predicted for other vehicles, etc.

In block 408, the processor may store or update the steering wheel command angle limit in a safe operating parameters data store or database within or accessible by various layers within the vehicle management system stack 200.

In some embodiments, the operations of blocks 402-408 may be repeated continuously (e.g., in or as part of a control loop), periodically (e.g., every 1 to 5 seconds), or episodically (e.g., upon detecting a change in speed and/or other operating conditions).

In block 410, the processor implementing a safety or oversight function may receive a determined steering wheel command angle. For example, motion planning and control layer 214 may determine a steering wheel command angle in order to achieve a desired change in direction of the vehicle. This steering wheel command angle may be received by the processor in block 410.

In determination block 412, the processor may determine whether the received or determined steering wheel command angle exceeds the steering wheel command angle limit stored in memory (i.e., determined in block 406).

In response to determining that the received or determined steering wheel command angle does not exceed the steering wheel command angle limit (i.e., determination block 412 = "No"), the processor may take no action (i.e., enable the received or determined steering wheel command angle to be implemented by the DBW system/control unit 220) in block 420. In some embodiments, the processor may relay the received or determined steering wheel command angle to the DBW system/control layer 220.

In response to determining that the steering wheel command angle exceeds the determined steering wheel command angle limit (i.e., determination block 412 = "Yes"), the processor may alter the steering wheel command angle, such as to no greater than the steering wheel command angle limit, in block 416.

In block 418, the processor may provide the altered steering wheel command angle to a control system, such as the DBW system/control unit 220. In some embodiments, the processor may also provide a command to slow the vehicle, such as a braking command or an adjustment to the throttle setting.

In some embodiments, operations of the method 400 may be performed continuously as part of an autonomous or semiautonomous navigation process.

In some embodiments, the operations of the method 400 may be performed in a single loop, such that determining the steering wheel command angle limit in block 406 may be performed in parallel with or in response to receiving a steering wheel command angle in block 410, in which case the operations in block 408 need not be performed.

In some embodiments, the operations of blocks 402-408 may be performed in one system, subsystem or stack layer while the operations in blocks 410-420 are performed in another system, subsystem or stack layer. In some embodiments, the operations of all blocks the method 400 may be performed in one system, subsystem or stack layer.

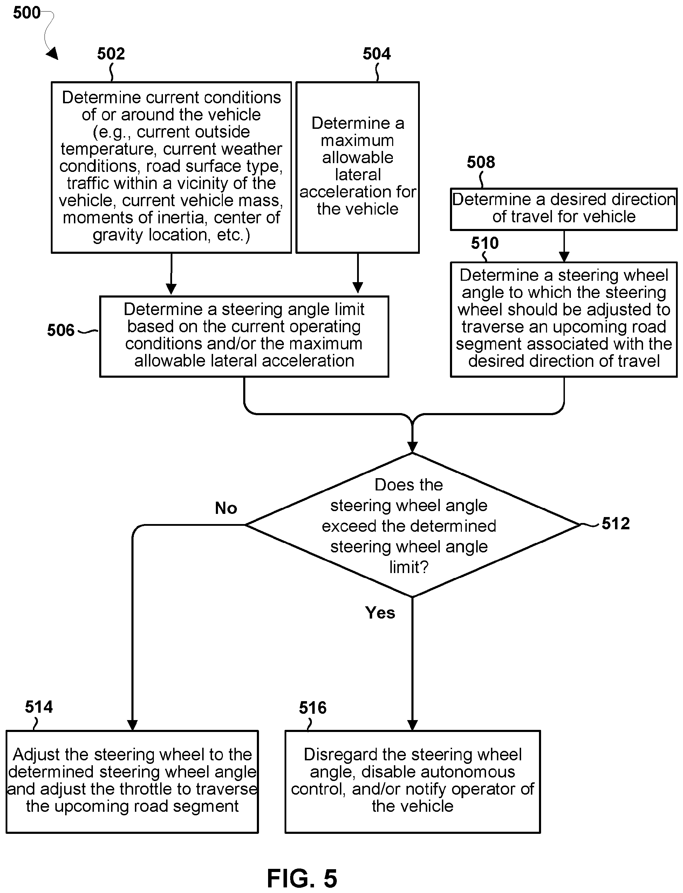

FIG. 5 illustrates a method 500 of controlling a vehicle in accordance with an embodiment. With reference to FIGS. 1A-5, the method 500 may be performed by a vehicle management system, processing device, system, subsystem or stack layer in an autonomous or semi-autonomous vehicle.

In block 502, the vehicle (or vehicle management system, etc.) may collect information from sensors and determine current conditions of or around the vehicle (e.g., current outside temperature, current weather conditions, road surface type, traffic within a vicinity of the vehicle, current vehicle mass, moments of inertia, center of gravity location, etc.).

In block 504, the vehicle may determine a maximum allowable lateral acceleration for the vehicle. For example, the vehicle may dynamically determine the maximum allowable lateral acceleration based on current operating conditions of the vehicle and other factors/considerations, such as passenger preferences (e.g., for comfort, sport or vehicle responsiveness, etc.), vehicle safety (e.g., to prevent spinouts, loss of control, rollovers, etc.), type of cargo (e.g., eggs vs. bricks, etc.), placement of cargo within the vehicle (e.g., high or low placement on a truck bed, etc.), etc.

In block 506, the vehicle may determine a steering angle limit based on the current operating conditions (particularly speed) and/or the maximum allowable lateral acceleration.

In block 508, the vehicle may determine a desired direction of travel for vehicle.

In block 510, the vehicle may determine a steering wheel angle to which the steering wheel should be adjusted to traverse an upcoming road segment.

In determination block 512, the vehicle may determine whether the steering wheel angle exceeds the determined steering wheel angle limit.

In response to determining that the steering wheel angle does not exceed the determined steering wheel angle limit (i.e., determination block 512 = "No"), the vehicle may adjust the steering wheel to the determined steering wheel angle and adjust the throttle to traverse the upcoming road segment in block 514.

In response to determining that the steering wheel angle exceeds the determined steering wheel angle limit (i.e., determination block 512 = "Yes"), the vehicle may disregard the steering wheel angle, modify the steering wheel angle (e.g., to the limit), disable autonomous control, notify operator of the vehicle and/or take another action (e.g., decelerate) in block 516.

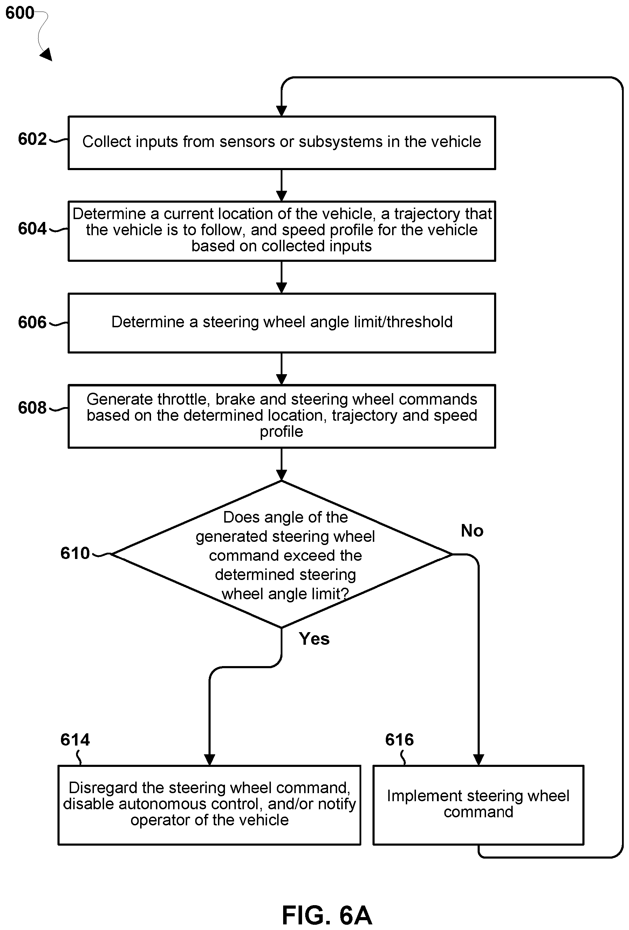

FIG. 6A illustrates a method 600 of controlling a vehicle in accordance with an embodiment. With reference to FIGS. 1A-6A, the method 600 may be performed by a vehicle management system, processing device, system, subsystem or stack layer in an autonomous or semi-autonomous vehicle.

In block 602, the vehicle may collect inputs from sensors or subsystems in the vehicle.

In block 604, the vehicle may determine a current location of the vehicle, a trajectory that the vehicle is to follow, and a speed profile for the vehicle based on the collected inputs.

In block 606, the vehicle may determine a steering wheel angle limit/threshold based on the collected inputs.

In block 608, the vehicle may generate a steering wheel command and a throttle and/or brake commands based on the determined location, trajectory and speed profile of the vehicle.

In determination block 610, the vehicle may determine whether the angle of the generated steering wheel command exceeds the determined steering wheel angle limit.

In response to determining that the angle of the generated steering wheel command exceeds the determined steering wheel angle limit (i.e., determination block 610 = "Yes"), the vehicle may discard or disregard the steering wheel angle, modify the steering wheel angle (e.g., to the limit), disable autonomous control, notify operator of the vehicle and/or take another action (e.g., decelerate) in block 614.

In response to determining that the angle of the generated steering wheel command does not exceed the determined steering wheel angle limit (i.e., determination block 610 = "No"), the vehicle may implement steering wheel command in block 616.

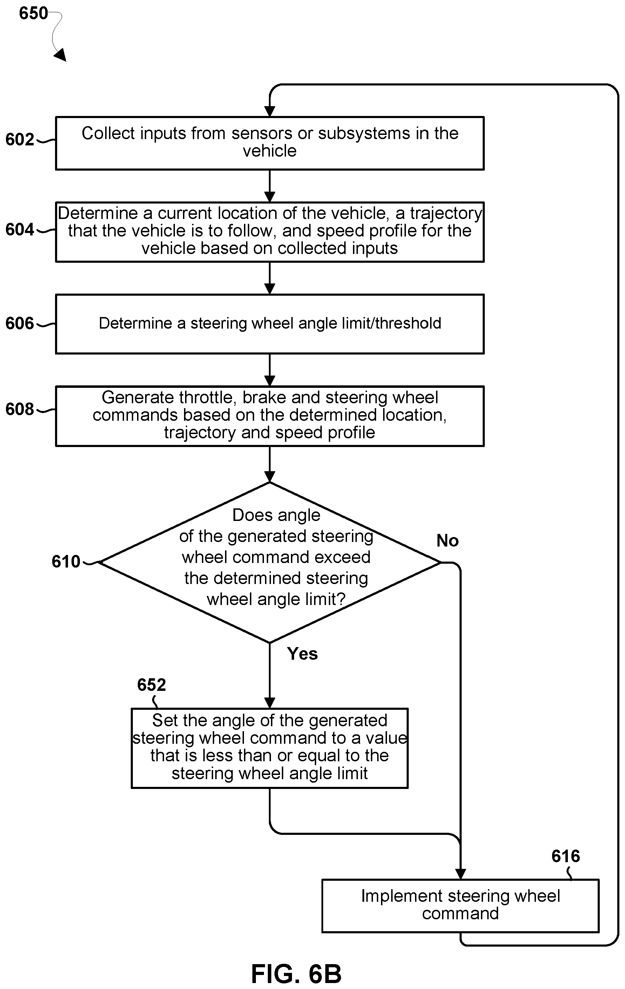

FIG. 6B illustrates a method 650 of controlling a vehicle in accordance with another embodiment. With reference to FIGS. 1A-6B, the method 650 may be performed by a vehicle management system, processing device, system, subsystem or stack layer in an autonomous or semi-autonomous vehicle. In blocks 602-610 and 616, the vehicle may perform the operations of the method 600 as described. However, in response to determining that the angle of the generated steering wheel command exceeds the determined steering wheel angle limit (i.e., determination block 610 = "Yes"), the vehicle may set the angle of the generated steering wheel command to a value that is less than or equal to the steering wheel angle limit in block 652 and implement the modified steering wheel command in block 616.

Various embodiments may improve the safe operation of autonomous and semiautonomous vehicles by limiting a steering wheel command angle, thereby ensuring vehicle safety under autonomous and semi-autonomous operations.

Various embodiments illustrated and described are provided merely as examples to illustrate various features of the claims. However, features shown and described with respect to any given embodiment are not necessarily limited to the associated embodiment and may be used or combined with other embodiments that are shown and described. Further, the claims are not intended to be limited by any one example embodiment.

The foregoing method descriptions and the process flow diagrams are provided merely as illustrative examples and are not intended to require or imply that the blocks of various embodiments must be performed in the order presented. As will be appreciated by one of skill in the art the order of blocks in the foregoing embodiments may be performed in any order. Words such as "thereafter," "then," "next," etc. are not intended to limit the order of the blocks; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm blocks described in connection with the embodiments disclosed herein may be implemented as electronic hardware, computer software, or combinations of both. To clearly illustrate this interchangeability of hardware and software, various illustrative components, blocks, modules, circuits, and blocks have been described above generally in terms of their functionality. Whether such functionality is implemented as hardware or software depends upon the particular application and design constraints imposed on the overall system. Skilled artisans may implement the described functionality in varying ways for each particular application, but such embodiment decisions should not be interpreted as causing a departure from the scope of various embodiments.

The hardware used to implement the various illustrative logics, logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of communication devices, e.g., a combination of a DSP and a microprocessor, a plurality of microprocessors, one or more microprocessors in conjunction with a DSP core, or any other such configuration. Alternatively, some blocks or methods may be performed by circuitry that is specific to a given function.

In various embodiments, the functions described may be implemented in hardware, software, firmware, or any combination thereof. If implemented in software, the functions may be stored as one or more instructions or code on a non-transitory computer-readable medium or non-transitory processor-readable medium. The operations of a method or algorithm disclosed herein may be embodied in a processor-executable software module, which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed embodiments is provided to enable any person skilled in the art to make or use the present embodiments. Various modifications to these embodiments will be readily apparent to those skilled in the art, and the generic principles defined herein may be applied to other embodiments without departing from the scope of the embodiments. Thus, various embodiments are not intended to be limited to the embodiments shown herein but are to be accorded the widest scope consistent with the following claims disclosed herein.

## Claims

1. A method of controlling a vehicle (100), comprising:
determining a steering wheel angle limit based on a maximum lateral acceleration of the vehicle (100);
generating a steering wheel command and a throttle-brake command;
determining whether an angle of the generated steering wheel command exceeds the determined steering wheel angle limit; and
adjusting an operation of the vehicle (100) in response to determining that the angle of the generated steering wheel command exceeds the determined steering wheel angle limit, wherein adjusting the operation of the vehicle (100) includes setting the angle of the generated steering wheel command to a value that is less than the steering wheel angle limit.

2. The method of claim 1, further comprising determining a location of the vehicle (100), a trajectory that the vehicle (100) is to follow, and a speed profile for the vehicle (100) based on inputs collected from one or more sensors (102-138) or subsystems (202-220) included in the vehicle (100),
wherein generating the steering wheel command and the throttle-brake command comprises generating the steering wheel command and the throttle-brake command based on the determined location, trajectory and speed profile.

3. The method of claim 1, wherein adjusting the operation of the vehicle (100) further includes notifying an operator of the vehicle (100).

4. The method of claim 1, further comprising determining the maximum lateral acceleration based on a current condition of the vehicle (100).

5. The method of claim 1, further comprising determining a current condition other than a current speed of the vehicle (100), wherein determining the steering wheel angle limit based on the maximum lateral acceleration of the vehicle (100) comprises determining the steering wheel angle limit based on the maximum lateral acceleration and the determined current condition.

6. The method of claim 5, wherein determining the current condition other than the current speed of the vehicle (100) comprises determining at least one or more of:
a vehicle condition;
a weather condition; or
a roadway condition.

7. The method of claim 1, further comprising determining a current speed of the vehicle (100), wherein:
determining the steering wheel angle limit based on the maximum lateral acceleration of the vehicle (100) comprises determining the steering wheel angle limit based on the maximum lateral acceleration and the current speed; and
generating the steering wheel command and the throttle-brake command comprises generating the steering wheel command to include the determined steering wheel angle limit.

8. The method of claim 1, further comprising determining a dynamic model of the vehicle (100), wherein:
determining the steering wheel angle limit based on the maximum lateral acceleration of the vehicle (100) comprises determining the steering wheel angle limit based on the dynamic model; and
generating the steering wheel command and the throttle-brake command comprises generating the steering wheel command to include the determined steering wheel angle limit.

9. The method of claim 8, wherein determining the dynamic model of the vehicle (100) comprises determining the dynamic model based on one or more of:
mass of the vehicle (100);
moments of inertia of the vehicle (100);
wheelbase length of the vehicle (100);
location of a center of gravity of the vehicle (100);
a tire stiffness coefficient; or
a tire dynamic model.

10. A vehicle (100), comprising:
a processor (164) configured with processor-executable instructions to carry out the method steps of any of claims 1 to 9.

11. A non-transitory processor-readable medium having stored thereon processor-executable instructions configured to cause a processor (164) of a vehicle (100) to perform the method steps of any of claims 1 to 9.

12. A processing device (164) for use in a vehicle (100), the processing device (164) configured to carry out the method steps of any of claims 1 to 9.

## Patentansprüche

1. Ein Verfahren zum Steuern eines Fahrzeugs (100), das Folgendes aufweist:
Bestimmen einer Lenkradwinkelgrenze basierend auf einer maximalen lateralen bzw. seitlichen Beschleunigung des Fahrzeugs (100);
Generieren eines Lenkradbefehls und eines Gas-Brems-Befehls;
Bestimmen, ob ein Winkel des generierten Lenkradbefehls die bestimmte Lenkradwinkelgrenze überschreitet; und
Anpassen eines Betriebs des Fahrzeugs (100) ansprechend auf Bestimmen, dass der Winkel des generierten Lenkradbefehls die bestimmte Lenkradwinkelgrenze überschreitet, wobei Anpassen des Betriebs des Fahrzeugs (100) Einstellen bzw. Festlegen des Winkels des generierten Lenkradbefehls auf einen Wert aufweist, der kleiner als die Lenkradwinkelgrenze ist.

2. Verfahren nach Anspruch 1, das weiter Bestimmen einer Position bzw. eines Standortes des Fahrzeugs (100), einer Trajektorie, der das Fahrzeug (100) folgen soll, und eines Geschwindigkeitsprofils für das Fahrzeug (100) basierend auf Eingaben aufweist, die von einem oder mehreren Sensoren (102 - 138) oder Subsystemen (202 - 220), die in dem Fahrzeug (100) enthalten sind, gesammelt werden,
wobei Generieren des Lenkradbefehls und des Gas-Brems-Befehls Generieren des Lenkradbefehls und des Gas-Brems-Befehls basierend auf dem bestimmten Standort, der bestimmten Trajektorie und dem bestimmten Geschwindigkeitsprofil aufweist.

3. Verfahren nach Anspruch 1, wobei Anpassen des Betriebs des Fahrzeugs (100) weiter Benachrichtigen eines Bedieners des Fahrzeugs (100) aufweist.

4. Verfahren nach Anspruch 1, das weiter Bestimmen der maximalen lateralen Beschleunigung basierend auf einem aktuellen Zustand des Fahrzeugs (100) aufweist.

5. Verfahren nach Anspruch 1, das weiter Bestimmen eines anderen aktuellen Zustandes als einer aktuellen Geschwindigkeit des Fahrzeugs (100) aufweist, wobei Bestimmen der Lenkradwinkelgrenze basierend auf der maximalen lateralen Beschleunigung des Fahrzeugs (100), Bestimmen der Lenkradwinkelgrenze basierend auf der maximalen lateralen Beschleunigung und dem bestimmten aktuellen Zustand aufweist.

6. Verfahren nach Anspruch 5, wobei Bestimmen des anderen aktuellen Zustandes als der aktuellen Geschwindigkeit des Fahrzeuges (100) Bestimmen von wenigstens einem oder mehrerem von Folgendem aufweist:
einem Fahrzeugzustand;
einem Wetterzustand; oder
einem Straßenzustand.

7. Verfahren nach Anspruch 1, das weiter Bestimmen einer aktuellen Geschwindigkeit des Fahrzeugs (100) aufweist, wobei:
Bestimmen der Lenkradwinkelgrenze basierend auf der maximalen lateralen Beschleunigung des Fahrzeugs (100), Bestimmen der Lenkradwinkelgrenze basierend auf der maximalen lateralen Beschleunigung und der aktuellen Geschwindigkeit aufweist; und
Generieren des Lenkradbefehls und des Gas-Brems-Befehls Generieren des Lenkradbefehls aufweist, so dass er die bestimmte Lenkradwinkelgrenze enthält.

8. Verfahren nach Anspruch 1, das weiter Bestimmen eines dynamischen Modells des Fahrzeugs (100) aufweist, wobei:
Bestimmen der Lenkradwinkelgrenze basierend auf der maximalen lateralen Beschleunigung des Fahrzeugs (100) Bestimmen der Lenkradwinkelgrenze basierend auf dem dynamischen Modell aufweist; und
Generieren des Lenkradbefehls und des Gas-Brems-Befehls Generieren des Lenkradbefehls aufweist, so dass dieser die bestimmte Lenkradwinkelgrenze enthält.

9. Verfahren nach Anspruch 8, wobei Bestimmen des dynamischen Modells des Fahrzeugs (100) Bestimmen des dynamischen Modells basierend auf einem oder mehrerem von Folgendem aufweist:
Masse des Fahrzeugs (100);
Trägheitsmoment des Fahrzeugs (100);
Länge des Radstands des Fahrzeugs (100);
Position des Schwerpunkts des Fahrzeugs (100);
einem Reifensteifigkeitskoeffizienten; oder
einem Reifendynamikmodell.

10. Ein Fahrzeug (100), das Folgendes aufweist:
einen Prozessor (164), der mit von einem Prozessor ausführbaren Instruktionen konfiguriert ist zum Durchführen der Verfahrensschritte nach einem der Ansprüche 1 bis 9.

11. Ein nicht transitorisches prozessorlesbares Medium mit darauf gespeicherten, von einem Prozessor ausführbaren Instruktionen, die konfiguriert sind, einen Prozessor (164) eines Fahrzeugs (100) zu veranlassen die Verfahrensschritte nach einem der Ansprüche 1 bis 9 durchzuführen.

12. Eine Verarbeitungseinrichtung (164) zur Nutzung in einem Fahrzeug (100), wobei die Verarbeitungseinrichtung (164) konfiguriert ist zum Durchführen der Verfahrensschritte nach einem der Ansprüche 1 bis 9.

## Revendications

1. Procédé de commande d'un véhicule (100), comprenant
la détermination d'une limite d'angle du volant sur la base d'une accélération latérale maximale du véhicule (100) ;
la génération d'une commande de volant et d'une commande d'accélération-freinage ;
la détermination de si un angle de la commande de volant générée dépasse la limite d'angle du volant déterminée ; et
le réglage d'une opération du véhicule (100) en réponse à la détermination que l'angle de la commande de volant générée dépasse la limite d'angle du volant déterminée, dans lequel le réglage de l'opération du véhicule (100) comporte le réglage de l'angle de la commande du volant générée à une valeur inférieure à la limite d'angle du volant.

2. Procédé selon la revendication 1, comprenant en outre la détermination d'un emplacement du véhicule (100), d'une trajectoire que le véhicule (100) doit suivre et d'un profil de vitesse pour le véhicule (100) sur la base d'entrées collectées à partir d'un ou de plusieurs capteurs (102-138) ou sous-systèmes (202-220) inclus dans le véhicule (100),
dans lequel la génération de la commande de volant et de la commande d'accélération-freinage comprend la génération de la commande de volant et de la commande d'accélération-freinage sur la base de l'emplacement, de la trajectoire et du profil de vitesse déterminés.

3. Procédé selon la revendication 1, dans lequel le réglage du fonctionnement du véhicule (100) comporte la notification à un opérateur du véhicule (100).

4. Procédé selon la revendication 1, comprenant en outre la détermination de l'accélération latérale maximale sur la base d'un état actuel du véhicule (100).

5. Procédé selon la revendication 1, comprenant en outre la détermination d'une condition actuelle autre qu'une vitesse actuelle du véhicule (100), dans lequel la détermination de la limite d'angle du volant sur la base de l'accélération latérale maximale du véhicule (100) comprend la détermination de la limite d'angle du volant sur la base de l'accélération latérale maximale et de la condition actuelle déterminée.

6. Procédé selon la revendication 5, dans lequel la détermination de la condition actuelle autre que la vitesse actuelle du véhicule (100) comprend la détermination d'au moins un ou plusieurs parmi :
un état du véhicule (100) ;
une condition météorologique ; ou
un état de la chaussée.

7. Procédé selon la revendication 1, comprenant en outre la détermination d'une vitesse actuelle du véhicule (100), dans lequel :
la détermination de la limite de l'angle du volant sur la base de l'accélération latérale maximale du véhicule (100) comprend la détermination de la limite de l'angle du volant sur la base de l'accélération latérale maximale et de la vitesse actuelle ; et
la génération de la commande du volant et de la commande d'accélération-freinage comprend la génération de la commande du volant pour inclure la limite d'angle du volant déterminée.

8. Procédé selon la revendication 1, comprenant en outre la détermination d'un modèle dynamique du véhicule (100), dans lequel :
la détermination de la limite de l'angle du volant sur la base de l'accélération latérale maximale du véhicule (100) comprend la détermination de la limite de l'angle du volant sur la base du modèle dynamique ; et
la génération de la commande du volant et de la commande d'accélération-freinage comprend la génération de la commande du volant pour inclure la limite d'angle du volant déterminée.

9. Procédé selon la revendication 8, dans lequel la détermination du modèle dynamique du véhicule (100) comprend la détermination du modèle dynamique sur la base d'un ou de plusieurs parmi :
la masse du véhicule (100) ;
des moments d'inertie du véhicule (100) ;
la longueur de l'empattement du véhicule (100) ;
la localisation du centre de gravité du véhicule (100) ;
un coefficient de rigidité des pneus ; ou
un modèle dynamique des pneus.

10. Véhicule (100), comprenant :
un processeur (164) configuré avec des instructions exécutables par le processeur pour mettre en œuvre les étapes de procédé selon l'une quelconque des revendications 1 à 9.

11. Support non transitoire lisible par processeur sur lequel sont stockées des instructions exécutables par processeur configurées pour amener un processeur (164) d'un véhicule (100) à exécuter les étapes de procédé selon l'une quelconque des revendications 1 à 9.

12. Dispositif de traitement (164) destiné à être utilisé dans un véhicule (100), le dispositif de traitement (164) étant configuré pour mettre en œuvre les étapes de procédé selon l'une quelconque des revendications 1 à 9.
